# EUROPEAN PATENT APPLICATION

(11) **EP 4 542 758 A1**
(43) Date of publication of application: **23.04.2025**
(21) Application number: 23852293.2
(22) Date of filing: 11.07.2023
(51) Int. Cl.: H01M 50/55, H01M 10/052, H01M 10/0566, H01M 10/0585, H01M 50/103, H01M 50/119, H01M 50/15, H01M 50/159, H01M 50/169, H01M 50/209, H01M 50/262, H01M 50/264, H01M 50/505, H01M 50/51, H01M 50/533

(54) **SECONDARY BATTERY AND BATTERY PACK THEREOF**

(30) Priority: 09.08.2022 JP 2022127167
(71) Applicant: NISSHA CO., LTD., Kyoto-shi, Kyoto 604-8551 (JP)
(72) Inventor: IKUTA, Kazuo, Kyoto-shi, Kyoto 604-8551 (JP); SANADA, Yuya, Kyoto-shi, Kyoto 604-8551 (JP)
(74) Representative: Isarpatent
(86) International application number: PCT/JP2023/025530
(87) International publication number: WO 2024/034310

(57) **Abstract**

A quadrangular secondary battery includes a shallow-drawn battery can and a lid plate welded together for sealing. A battery pack includes such secondary batteries without causing a busbar to be larger or to interfere with duct placement and without causing stress concentration on welding beads under a restraining load. A secondary battery (1) includes an electricity generator, a metal battery can (3), a nonaqueous electrolyte, a metal lid plate (5), and a pair of external terminals (6, 7). The battery can (3) is quadrangular and shallow-drawn, accommodates the electricity generator placed laterally, and includes a flange (34) on a periphery of its opening. The nonaqueous electrolyte fills the battery can (3) accommodating the electricity generator. The lid plate (5) includes an outer edge (51a) welded to the flange (34) on the battery can (3) and covers the battery can (3). The lid plate (5) includes a raised portion (52) being flat and extending beyond the outer edge (51a) in an inner area of the outer edge (51a).

## Description

### TECHNICAL FIELD

The present invention relates to a secondary battery and a battery pack including multiple secondary batteries connected in series.

### BACKGROUND

A known method for manufacturing a secondary battery typically includes placing an electricity generator in a metal battery can that is a bottomed cylinder, press-fitting a metal lid plate into an inner portion of the battery can surrounded by its opening end, and welding the press-fitted overlapping portion with a laser beam irradiated from above the lid plate.

However, when the lid plate is press-fitted into the battery can, foreign objects such as burrs or penetrating particles (spatters) in welding may enter the battery can, lowering the battery performance.

Methods have thus been developed for manufacturing such sealed secondary batteries. For example, the outer edge of the lid plate is placed to overlap the opening end of the battery can, and the overlapping portion is laser-welded in the lateral direction of the lid plate (Patent Literature 1). In another example, the opening end of the battery can includes a step on its inner periphery. The lid plate is placed on the step, and the peripheral portion at which the battery can and the lid plate overlap is laser-welded from above the lid plate (Patent Literature 2). In still another example, the lid plate is stepped. A larger-diameter portion of the lid plate is placed to overlap the battery can with a smaller-diameter portion of the lid plate fitted in the battery can, and the overlapping portion between the battery can and the lid plate is laser-welded in the lateral direction of the lid plate (Patent Literature 3).

The above structures can prevent foreign objects from entering during press-fitting. However, with the welded portion extending to the inner periphery of the battery can, the above structures cannot prevent spatters from entering the battery can and are thus insufficient to prevent the battery performance from being lowered by entering objects.

In contrast, a sealed battery described in Patent Literature 4 includes a battery can including an annular flange and accommodating an electricity generator, with a lid plate welded to the opening end of the battery can. The flange extends outward from the opening end of the battery. The outer edge of the lid plate is placed to overlap the flange, and the overlapping portion is laser-welded from the upper surface of the lid plate.

This structure includes the welded portion on the outer periphery of the battery can, reducing the likelihood that spatters from welding enter the battery can.

### CITATION LIST

### PATENT LITERATURE

Patent Literature 1: Japanese Unexamined Patent Application Publication No. 3-93148
Patent Literature 2: Japanese Unexamined Patent Application Publication No. 2000-231908
Patent Literature 3: Japanese Unexamined Patent Application Publication No. 11-307065
Patent Literature 4: Japanese Unexamined Patent Application Publication No. 2003-132857

### BRIEF SUMMARY

### TECHNICAL PROBLEM

Secondary batteries are currently widespread in power storage systems for, for example, electric vehicles and photovoltaic power generation. Such secondary batteries are often quadrangular for application in products and systems and for accommodation. However, bottomed cylindrical battery cans cannot be shaped freely by deep drawing. Thus, a quadrangular secondary battery cannot be thinner easily.

In contrast, a battery can may be shaped into a quadrangular by shallow drawing to accommodate the electricity generator placed laterally on its bottom. This allows the secondary battery to be quadrangular and thinner.

However, secondary batteries including the shallow-drawn quadrangular battery cans may cause a different issue when connected in series to form a battery pack.

More specifically, the battery pack includes multiple secondary batteries stacked on one another in a direction perpendicular to the main surfaces of the secondary batteries that have the maximum area. For each secondary battery, a positive external terminal and a negative external terminal as a pair are separately located on its side surface to be the upper surface of the battery pack in the longitudinal direction of the side surface. To connect adjacent secondary batteries in series, one of the pair of external terminals (e.g., the positive terminal) of a secondary battery and the other of the pair of external terminals (e.g., the negative terminal) of the adjacent secondary battery are connected with a metal member referred to as a busbar. A group of secondary batteries that is a stack of the multiple secondary batteries receives a restraining load from a restraining member.

When the secondary batteries are arranged with all battery cans and all lid plates facing in the same direction, external terminals with the same polarity in the battery pack are arranged in a row in a direction in which the secondary batteries are arranged, and adjacent secondary batteries are thus connected in series with busbars placed in a crossed manner. This may upsize the busbars. The busbars connected in a crossed manner across adjacent secondary batteries may interfere with placement of a duct for passing, for example, smoke or vapor released from safety valves in the secondary batteries.

When the secondary batteries are arranged with the battery cans and the lid plates of adjacent secondary batteries facing in opposite directions, or in other words, when the shallow-drawn bottoms of the battery cans of adjacent secondary batteries face each other and the lid plates of adjacent secondary batteries face each other, external terminals with the same polarity in the battery pack are arranged in a zigzag manner in the direction in which the secondary batteries are arranged, and the busbars are thus not placed in a crossed manner to connect adjacent secondary batteries in series. In other words, multiple busbars are placed parallel to the direction in which the secondary batteries are arranged to connect the external terminals.

In this case, however, with the lid plates of adjacent secondary batteries facing each other, joints between the flanges on the battery cans and the lid plates, or in other words, portions welded by laser welding, overlap each other. With the multiple secondary batteries assembled into the battery pack receiving the restraining load from the restraining member in the direction in which the secondary batteries are arranged, the welded portions overlapping each other also receive the restraining load. This may cause stress concentration on welding beads in the welded portions, thus lowering the durability.

In response to the above issue, one or more aspects of the present invention are directed to a quadrangular secondary battery including a shallow-drawn battery can and a lid plate welded together for sealing, and to a battery pack including such secondary batteries without causing a busbar to be larger or to interfere with placement of a duct and without causing stress concentration on welding beads under a restraining load.

### SOLUTION TO PROBLEM

In response to the above issue, aspects of the present invention will be described below. Any of these aspects may be combined as appropriate.

A secondary battery according to an aspect of the present invention includes an electricity generator, a battery can, a nonaqueous electrolyte, a lid plate, and a pair of external terminals.

The electricity generator is flat and includes a stack of plurality of cathodes, a anodes, and separators insulating the cathodes and the anodes.

The battery can comprises a metal, being quadrangular and shallow-drawn, accommodating the electricity generator placed laterally. In addition, the battery can includes a flange on a periphery of an opening of the battery can. The nonaqueous electrolyte fills the battery can accommodating the electricity generator.

The lid plate comprises a metalincluding an outer edge welded to the flange on the battery can and covering the battery can. The lid plate includes a raised portion being flat and extending outward beyond the outer edge in an inner area of the outer edge.

One external terminal of a pair of external terminals is arranged on one of side walls of the battery can and is electrically connected to one of the cathodes or the anodes in the electricity generator. The other external terminal of the pair of external terminals is arranged on one side of the lid plate on the same side as the side wall on which the one external terminal is arranged and in a position that is line symmetric to the one external terminal in a plan view, and is electrically connected to the other of the cathodes or the anodes in the electricity generator.

A battery pack according to an aspect of the present invention includes a plurality of the above secondary batteries arranged with the pair of the positive external terminals and the negative external terminals on the upper side, with the front and back of the main surface being alternately switched in a direction perpendicular to the main surfaces having the largest area. In addition, adjacent secondary batteries are connected in series with a busbar. Furthermore, the restraining member applies a restraining load in the arrangement direction of the secondary batteries.

In the battery pack with this structure, the external terminals are connected with two busbars placed parallel to the direction in which the secondary batteries are arranged. This prevents the busbars from being larger or interfering with placement of a duct.

Additionally, the lid plate in each of the secondary batteries includes the raised portion being flat and extending outward beyond the outer edge in an inner area of the outer edge, preventing the outer edges of the adjacent lid plates from coming in contact with each other. Thus, stress from the restraining load does not concentrate on welding beads.

In the above secondary battery, the raised portion of the lid plate may have a height of 0.1 to 3 mm.

In the above secondary battery, the lid plate may be a shallow-drawn metal plate and may include a shallow-drawn portion being the raised portion extending outward.

In the above secondary battery, the lid plate may be a stack of a flat metal plate and a raised portion layer having a smaller area than the flat metal plate, and the raised portion may be composed of thickness of the stacked raised portion layers. With the raised portion layer being stacked, the raised portion being flat may be present divided into a plurality of areas in a plan view, and there is a clearance between the plurality of areas of the raised portion.

### ADVANTAGEOUS EFFECTS

The secondary battery and the battery pack according to the above aspects of the present invention can avoid causing the busbar to be larger or to interfere with placement of a duct and can avoid stress concentration on the welding beads under a restraining load.

### BRIEF DESCRIPTION OF DRAWINGS

FIG. 1A is a front perspective view of a lithium-ion secondary battery according to a first embodiment of the present invention, showing its example appearance, and FIG. 1B is a back perspective view of the lithium-ion secondary battery according to the first embodiment of the present invention, showing its example appearance.
FIG. 2 is an exploded perspective view of the lithium-ion secondary battery according to the first embodiment of the present invention, showing its example internal structure.
FIG. 3 is a partially enlarged cross-sectional view of the lithium-ion secondary battery according to the first embodiment of the present invention, showing an example raised portion of its lid plate.
FIG. 4 is a perspective view of an example battery pack including the lithium-ion secondary batteries according to the first embodiment of the present invention.
FIG. 5 is a partially enlarged cross-sectional view of a lithium-ion secondary battery according to a second embodiment of the present invention, showing an example raised portion of its lid plate.
FIGS. 6A to 6D are plan views of the lithium-ion secondary batteries according to the second embodiment of the present invention, showing various example raised portions of their lid plates.

### DETAILED DESCRIPTION

A lithium-ion secondary battery as an example of a secondary battery will be described below according to one or more embodiments of the present invention. The secondary battery according to one or more embodiments of the present invention is not limited to the lithium-ion secondary battery.

### First Embodiment

A first embodiment of the present invention will now be described with reference to the drawings.

### 1. Structure of Secondary Battery

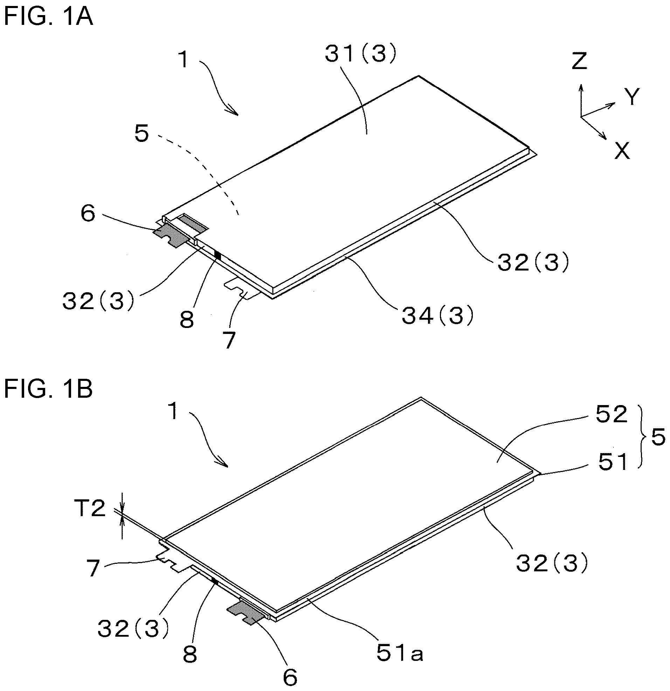

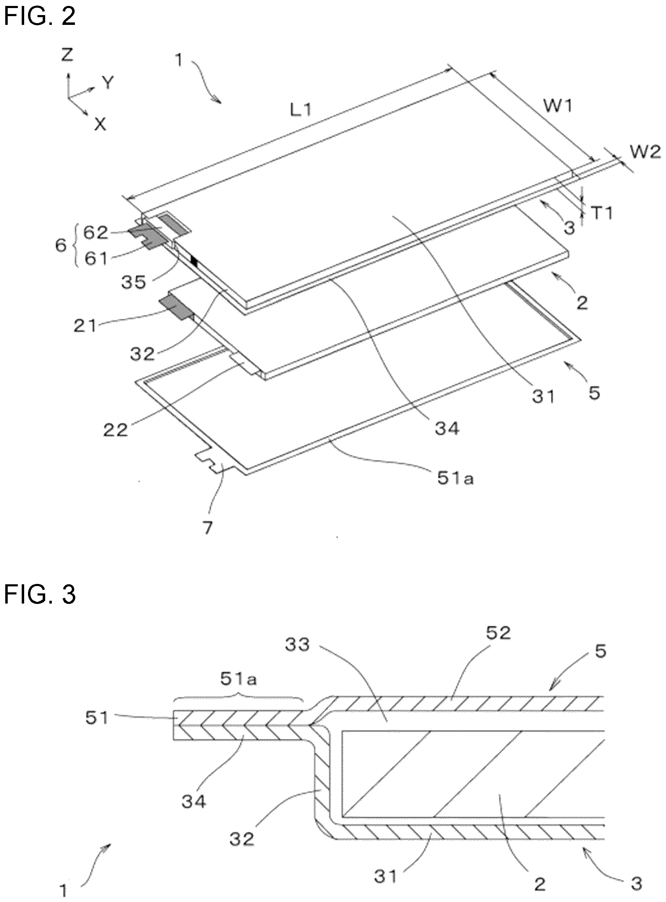

FIG. 1A is a front perspective view of a lithium-ion secondary battery according to a first embodiment of the present invention, showing its example appearance. FIG. 1B is a back perspective view of the lithium-ion secondary battery according to the first embodiment of the present invention, showing its example appearance. FIG. 1A is a perspective view showing a battery can. FIG. 1B is a perspective view showing a lid plate. FIG. 2 is an exploded perspective view of the lithium-ion secondary battery according to the first embodiment of the present invention, showing its example internal structure. In FIG. 2, a nonaqueous electrolyte of the secondary battery normally filling the battery can is not shown to clarify the internal structure of the lithium-ion secondary battery. FIG. 3 is a partially enlarged cross-sectional view of the lithium-ion secondary battery according to the first embodiment of the present invention, showing an example raised portion of its lid plate.

As shown in FIGS. 1A, 1B, and 2, a lithium-ion secondary battery 1 according to the first embodiment is quadrangular and flat, and includes an electricity generator 2, a battery can 3 accommodating the electricity generator 2, a nonaqueous electrolyte (not shown) filling the battery can 3 accommodating the electricity generator 2, a lid plate 5 covering the battery can 3, and a pair of external terminals (a positive terminal 6 and an negative terminal 7) electrically connected to the cathodes and the anodes of the electricity generator 2.

### 1-a. Electricity Generator

The electricity generator 2 is flat and includes multiple cathodes, multiple anodes, and multiple separators for insulating the cathodes and the anodes from each other.

The electricity generator 2 may be, for example, a stack in which one of the multiple cathodes, one of the multiple anodes, and one of the multiple separators are stacked on one another repeatedly. A single cathode and a single anode are alternately stacked, with the anodes being outermost. The separators are located between each cathode and each anode, and located outermost in the electricity generator 2. The main surfaces of the electricity generator 2 are parallel to the surfaces of the cathodes and the anodes.

In another example of the electricity generator 2 that is a stack, the multiple cathodes, the multiple anodes, and a single separator folded zigzag may be combined together. Folding zigzag refers to folding in a zigzag pattern. In other words, the separator is a single continuous strip folded zigzag to be sandwiched between each of the cathodes 11 and each of the anodes 12 alternately stacked on one another. The separator has one end located outermost in the electricity generator 2. The main surfaces of the electricity generator 2 are parallel to the surfaces of the cathodes and the anodes.

The electricity generator 2 may be a laminate sheet including the cathode, the anode, and two separators and wound multiple times. In one or more embodiments of the present invention, the wound electricity generator 2 is wound flatly to be the electricity generator 2 that is flat.

### (1) Cathode

Each cathode included in the electricity generator 2 includes a cathode current collector and cathode active material layers supported on two surfaces of the cathode current collector.

The cathode current collector collects current from the cathode active material layers. The cathode current collector is, for example, foil of a metal such as aluminum, titanium, stainless steel, nickel, or iron, or foil of an alloy of these metals. The cathode current collector has a thickness of about 1 to 500 µm.

Each cathode active material layer contains a cathode active material that can occlude and release lithium ions. Examples of the cathode active material include an oxide containing lithium. More specifically, the examples include LiCoO₂, LiFeO₂, LiMnO₂, and LiMn₂O₄, and compounds of these oxides in which at least one transition metal is substituted with another metallic element.

### (2) Anode

Each anode included in the electricity generator 2 includes an anode current collector and anode active material layers supported on two surfaces of the anode current collector.

The anode current collector collects current from the anode active material layers. The anode current collector is, for example, foil of a metal such as copper, nickel, stainless steel, iron, or a nickel-plated layer, or foil of an alloy of these metals. The anode current collector has a thickness of about 1 to 100 µm.

Each anode active material layer contains an anode active material that can occlude and release lithium ions. Examples of the anode active material include a substance that can occlude and release lithium. More specifically, the examples include particles (e.g., scales, lumps, fibers, wisckers, spheres, or ground particles) of natural graphite or artificial graphite. Artificial graphite obtained by graphitizing, for example, mesocarbon microbeads, mesophase pitch powder, or isotropic pitch powder may also be used as the anode active material. Graphite particles with amorphous carbon adhered on their surfaces may also be used. A lithium transition metal oxide, a lithium transition metal nitride, a transition metal oxide, or silicon oxide may also be used. Examples of the lithium transition metal oxide include lithium titanate such as Li₄Ti₅O₁₂.

### (3) Separator

Each separator included in the electricity generator 2 has pores for allowing ions to travel.

The separator may have sufficient strength and hold a large amount of a nonaqueous electrolyte. For example, the separator may be a microporous film of polyethylene, polypropylene, or ethylene-propylene copolymer, or a nonwoven fabric. Other examples include a microporous film of a polymer such as polyvinylidene fluoride, polyvinylidene chloride, polyacrylonitrile, polyacrylamide, polytetrafluoroethylene, polysulfone, polyethersulfone, polycarbonate, polyamide, polyimide, polyether, cellulose, poly(meth)acrylic acid, or poly(meth)acrylic acid ester. A multilayer film that is a stack of these microporous films may also be used. The separator may have a thickness of 5 to 100 µm. The separator may have a porosity of 30 to 90%.

### (4) Electrode Tab

As shown in FIG. 2, the electricity generator 2 is electrically connected to the pair of external terminals (the positive terminal 6 and the negative terminal 7) with a cathode tab 21 for the cathode current collectors in the cathodes and with an anode tab 22 for the anode current collectors in the anodes. The cathode tab 21 and the anode tab 22 protrude from the same end face of the electricity generator 2. The cathode tab 21 and the anode tab 22 may be formed from the same material as or a different material from the current collectors.

### 1-b. Nonaqueous Electrolyte

The nonaqueous electrolyte (not shown) contained in the battery can 3 together with the electricity generator 2 may be any nonaqueous electrolyte, but may contain a polar solvent such as, for example, an ester including ethylene carbonate (EC), propylene carbonate, butylene carbonate, diethyl carbonate (DEC), dimethyl carbonate (DMC), ethyl methyl carbonate (EMC), and γ-butyrolactone, an ether including tetrahydrofuran, 2-methyltetrahydrofuran, dioxane, dioxolane, diethyl ether, dimethoxyethane, diethoxyethane, and methoxyethoxy ethane, or dimethyl sulfoxide, sulfolane, methylsulfolane, acetonitrile, methyl formate, or methyl acetate. These solvents may be used alone, or a mixture of two or more solvents may be used as a mixed solvent.

### 1-c. Battery Can

The battery can 3 is a flat quadrangular metal can. The battery can 3 is formed by shallow-drawing a metal plate. The shallow-drawn battery can 3 includes a rectangular bottom 31, four side walls 32 standing upright on the respective sides of the bottom 31, an opening 33 defined by ends of the four side walls 32 opposite to the bottom 31, and a flange 34 extending outward from the periphery of the opening 33. The bottom 31 of the battery can 3 and the flange 34 are parallel to each other.

The bottom 31, the side walls 32, and the opening 33 of the battery can 3 are sized to accommodate the flat electricity generator 2 placed laterally, or in other words, to accommodate the flat electricity generator 2 with a main surface of the electricity generator 2 facing the bottom 31. More specifically, the battery can 3 has, for example, a length (a length L1 in the Y-direction in FIG. 2) of 202 mm in the longitudinal direction of its outer surface at the bottom 31, and a length (a length W1 in the X-direction in FIG. 2) of 94 mm in the lateral direction of the outer surface at the bottom 31. The battery can 3 has a depth (a length T1 in the Z-direction in FIG. 2) of, for example, 4 mm on the outer surface.

The opening 33 of the battery can 3 has the same size as or is slightly larger than the bottom 31. When the opening 33 is slightly larger than the bottom 31, inner surfaces of the side walls 32 are inclined at, for example, about 5°.

The flange 34 on the battery can 3 is large enough for welding the flange 34 and an outer edge 51a (described later) of the lid plate 5 together. The flange 34 has a length (a length W2 in the X- and Y-directions in FIG. 2) of, for example, 3 mm in the directions in which the flange 34 extends.

The dimensions of the battery can 3 described in the present and previous paragraphs are examples, and the battery can 3 in one or more embodiments of the present invention may have different dimensions.

Shallow drawing is a type of drawing. Drawing is a processing method for forming a seamless bottomed container in various shapes from a single thin metal plate. Drawing to form a shallow container such as an ashtray or a frying pan is typically referred to as shallow drawing, and drawing to form a cylindrical container with a depth greater than the size of its opening (the diameter of a cylinder, or sides of an opening of a hollow prism) as deep drawing. Shallow drawing in one or more embodiments of the present invention is used to form the battery can 3 with its bottom being a main surface of the flat quadrangular lithium-ion secondary battery 1.

The metal plate for shallow-drawing the battery can 3 may be a plate of, for example, iron, stainless steel, aluminum, or copper. The metal plate may have a thickness of, for example, 0.1 to 1 mm.

One of the four side walls 32 of the battery can 3 includes, in its middle portion, a safety valve 8 (refer to FIGS. 1A, 1B, and 2) to be open in response to the internal battery pressure exceeding a predetermined pressure. The internal battery pressure increases under excess heat resulting from, for example, deterioration or overcharge. The safety valve 8 is, for example, a through-hole sealed with a cap from outside. When the internal battery pressure increases, the cap is removed to release the safety valve 8. The safety valve 8 may be located on a side wall 32 facing upward when assembled into a battery pack including multiple secondary batteries.

The metal battery can 3 may have its outer surfaces covered with an insulating film (not shown) as described in 2. Structure of Battery Pack (described later).

### 1-d. Lid Plate

The lid plate 5 is formed from a metal and has the outer edge 51a welded to the flange 34 on the battery can 3 to cover the battery can 3. The lid plate 5 and the battery can 3 form an outer container for the lithium-ion secondary battery 1. As shown in FIGS. 1A, 1B, and 2, the lid plate 5 is rectangular to cover the opening 33 of the battery can 3 and includes a flat raised portion 52 extending outward beyond the outer edge 51a in an inner area of the outer edge 51a of a metal plate 51 included in the lid plate 5. The bottom 31 of the battery can 3 and the top surface of the raised portion 52 of the lid plate 5 are parallel to each other.

As shown in FIG. 3, the raised portion 52 of the lid plate 5 in the first embodiment is formed by shallow-drawing a flat metal plate. In other words, the lid plate 5 is the shallow-drawn metal plate 51 and includes a shallow-drawn portion that is the raised portion 52 extending outward.

The lid plate 5 is sized to allow the outer edge 51a to overlap and be weldable to the flange 34.

The raised portion 52 of the lid plate 5 has a height (a height T2 in the Z-direction in FIG. 1B) of 0.1 to 3 mm, or more specifically, 0.1 to 2 mm. When the height of the raised portion 52 is less than 0.1 mm, the lid plates 5 in adjacent lithium-ion secondary batteries 1 come in contact with each other in a battery pack 10 including the lithium-ion secondary batteries 1 arranged with the lid plates 5 facing each other. This structure cannot avoid stress concentration on welding beads between the battery can 3 and the lid plate 5. When the height of the raised portion 52 exceeds 3 mm, side surfaces of the raised portion 52 interfere with a laser beam used for welding. (When tilted further for irradiation, the laser beam may exceed the range for processing with a galvanometer scanner, thus lowering the productivity.)

The metal plate 51 used for shallow-drawing the lid plate 5 may be a metal plate of the same material and with the same thickness as the metal plate used for the battery can 3.

The outer edge 51a of the lid plate 5 and the flange 34 on the battery can 3 are fixed together by welding with, for example, laser.

The nonaqueous electrolyte is injected through an injection hole (not shown) after the opening 33 of the battery can 3 is sealed with the lid plate 5. A seal having substantially the same diameter as the injection hole is placed in the injection hole, and the injection hole is sealed by welding with, for example, laser. The injection hole may be formed in any location. The injection hole may be formed in the bottom 31 or any of the four side walls 32 of the battery can 3, or in the lid plate 5.

The metal lid plate 5 may have its outer surfaces covered with an insulating film (not shown) as described in 2. Structure of Battery Pack (described later).

### 1-e. External Terminal

The lithium-ion secondary battery 1 includes the positive terminal 6 and the negative terminal 7 as the pair of external terminals (refer to FIGS. 1A, 1B, and 2) electrically connected to the cathodes and the anodes (not shown) of the electricity generator 2. As shown in FIG. 2, the electricity generator 2 accommodated in the battery can 3 thus includes the cathode tab 21 for connecting the cathodes and the positive terminal 6 that is an external terminal, and the anode tab 22 for connecting the anodes and the negative terminal 7 that is an external terminal. The cathode tab 21 and the anode tab 22 protrude from the same end face of the electricity generator 2.

The positive terminal 6 is located on one of the side walls 32 of the battery can 3. The positive terminal 6 includes, for example, a thin plate-like positive terminal body 61 placed in a slot 35 in the side wall 32 of the battery can 3, and an insulating member 62 that prevents contact between the positive terminal body 61 and inner walls of the slot 35 in the battery can 3 (refer to FIGS. 1A, 1B, and 2). The space between the positive terminal body 61 and the inners walls of the slot 35 in the battery can 3 is fully sealed with the insulating member 62.

The negative terminal 7 is located on one side of the lid plate 5 facing in the same direction as the side wall 32 of the battery can 3 on which the positive terminal 6 is located. The negative terminal 7 is located line symmetric with the positive terminal 6 in a plan view. The negative terminal 7 is, for example, punched integrally with the rectangular lid plate 5 from the metal plate to be continuous with the lid plate 5 (refer to FIGS. 1A, 1B, and 2).

The positive terminal 6 and the negative terminal 7 that produce the advantageous effects described in one or more embodiments of the present invention may not be precisely line symmetric with each other in a plan view and may deviate from the precise positions within a tolerance.

The negative terminal 7 may be separate from the rectangular lid plate 5 and may be fixed to the lid plate 5 by welding with, for example, laser.

The positive terminal 6 and the negative terminal 7 may have connection structures opposite to the structures described above, with the positive terminal 6 electrically connected to the cathodes of the electricity generator 2 correctly, and the negative terminal 7 electrically connected to the anodes of the electricity generator 2 correctly. The external terminals in one or more embodiments of the present invention may have any known connection structures other than the connection structures described in the first embodiment as appropriate.

### 2. Structure of Battery Pack

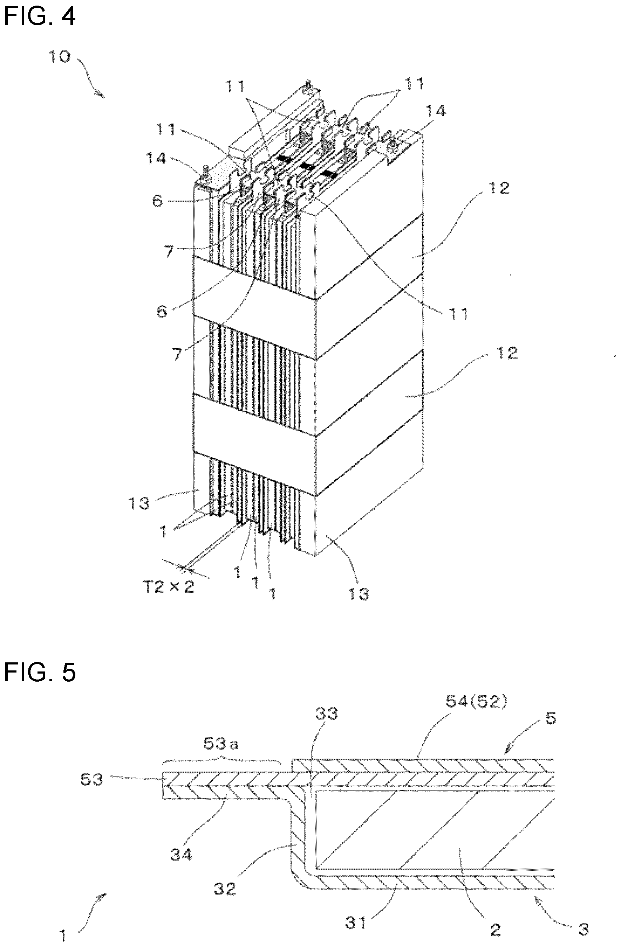

FIG. 4 is a perspective view of an example battery pack including the lithium-ion secondary batteries according to the first embodiment of the present invention.

As shown in FIG. 4, the battery pack 10 including the above lithium-ion secondary battery 1 according to the first embodiment includes multiple lithium-ion secondary batteries 1 described above. The lithium-ion secondary batteries 1 are arranged in a direction perpendicular to their main surfaces having the largest area. The battery pack 10 includes busbars 11 that connect adjacent lithium-ion secondary batteries 1 in series. The battery pack 10 further includes restraining members (e.g., the bands 12) that apply a restraining load to the lithium-ion secondary batteries 1 in a direction in which the lithium-ion secondary batteries 1 are arranged. In the example shown in FIG. 4, the battery pack 10 includes seven lithium-ion secondary batteries 1.

### 2-a. Arrangement of Secondary Battery

As shown in FIG. 4, the multiple lithium-ion secondary batteries 1 included in the battery pack 10 are arranged with the pair of the positive external terminals and the negative external terminals (the positive terminals 6 and the negative terminals 7) on the upper side.

In addition, as shown in FIG. 4, the multiple lithium-ion secondary batteries 1 included in the battery pack 10 are arranged with a front and back of the main surface being alternately switched. For example, when the lid plate 5 is the front surface of the lithium-ion secondary battery 1 and the battery can 3 is the back surface of the lithium-ion secondary battery 1, the multiple lithium-ion secondary batteries 1 in the battery pack 10 are arranged in the order of the front surface and the back surface of the first lithium-ion secondary battery 1, the back surface and the front surface of the second lithium-ion secondary battery 1, the front surface and the back surface of the third lithium-ion secondary battery 1, ..., and the back surface and the front surface of the seventh lithium-ion secondary battery 1. With the positive terminal 6 and the negative terminal 7 of each lithium-ion secondary battery 1 located line symmetric in a plan view (refer to FIGS. 1A, 1B, and 2), the external terminals facing upward in the battery pack 10 are arranged in two rows in the direction in which the lithium-ion secondary batteries 1 are arranged. In one row, the positive terminals 6 and the negative terminals 7 are arranged alternately, in the order of the positive terminal 6, the negative terminal 7, the positive terminal 6, the negative terminal 7, ..., the positive terminal 6, and the negative terminal 7. In the other row, the negative terminals 7 and the positive terminals 6 are arranged alternately, in the order of the negative terminal 7, the positive terminal 6, the negative terminal 7, the positive terminal 6, ..., the negative terminal 7, and the positive terminal 6. In the example shown in FIG. 4, each row includes seven external terminals of the lithium-ion secondary batteries 1.

For each of the multiple lithium-ion secondary batteries 1 according to the present embodiment, the metal battery can 3 and the metal lid plate 5 welded together forms a case that has an electric potential. Thus, when assembled into the battery pack 10, the lithium-ion secondary batteries 1 are to be insulated from one another. To insulate each lithium-ion secondary battery 1, a portion of the front surface of the metal case that comes in contact with an adjacent lithium-ion secondary battery 1 may be covered with an insulating film (not shown). Each lithium-ion secondary battery 1 may be placed in an insulating bag (not shown), or an insulating plate (not shown) may be placed between the lithium-ion secondary batteries 1.

### 2-b. Busbar

Each busbar 11 is a metal member that connects adjacent lithium-ion secondary batteries 1 in series.

As described above, the external terminals facing upward in the battery pack 10 are arranged in two rows in the direction in which the lithium-ion secondary batteries 1 are arranged. In each row, the negative terminals 7 and the positive terminals 6 are arranged alternately. Thus, as shown in FIG. 4, the busbars 11 extend parallel to each other in the direction in which the lithium-ion secondary batteries 1 are arranged, without placed in a crossed manner across adjacent lithium-ion secondary batteries 1.

In the battery pack 10 with this structure, the external terminals are connected with the multiple busbars 11 arranged in two rows in the direction in which the lithium-ion secondary batteries 1 are arranged. This prevents the busbars 11 from being larger or interfering with placement of a duct.

Examples of the material for the busbars 11 include copper, aluminum, steel, nickel, and an alloy of these metals.

In the example battery pack 10 shown in FIG. 4, three busbars 11 connect each of the two rows of the external terminals arranged in the direction in which the lithium-ion secondary batteries 1 are arranged.

In FIG. 4, the multiple lithium-ion secondary batteries 1 are sandwiched between two end plates 13. The two end plates 13 each include, on its upper surface, a battery pack terminal 14 that is electrically connected to an outermost positive terminal 6 and an outermost negative terminal 7 of the battery pack 10 with a metal member similar to the busbar 11.

### 2-c. Band

The bands 12 restrain the multiple lithium-ion secondary batteries 1 in the battery pack 10 from separating.

In the example shown in FIG. 4, two parallel bands 12 bind the multiple lithium-ion secondary batteries 1 from side surfaces of the battery pack 10 (surfaces of the battery pack 10 except the upper surface on which the positive terminal 6 and the negative terminal 7 of the lithium-ion secondary batteries 1 are located and the lower surface opposite to the upper surface).

In the battery pack 10 with this structure, the lid plate 5 in each lithium-ion secondary battery 1 includes the flat raised portion 52 extending outward beyond the outer edge 51a in an inner area of the outer edge 51a, preventing the outer edges 51a of the lid plates 5 in adjacent lithium-ion secondary batteries 1 from coming in contact with each other. Thus, stress from the restraining load does not concentrate on the welding beads.

Each band 12 may be an iron strip.

A shaft or a slit structure for press-fitting may be used as the restraining member, rather than the band 12.

### Second Embodiment

A second embodiment of the present invention will now be described with reference to the drawings.

FIG. 5 is a partially enlarged cross-sectional view of a lithium-ion secondary battery according to a second embodiment of the present invention, showing an example raised portion of its lid plate.

In the lithium-ion secondary battery 1 according to the first embodiment, the lid plate 5 is the shallow-drawn metal plate 51 including the shallow-drawn portion that is the raised portion 52 extending outward (refer to FIG. 3). In some embodiments of the present invention, however, the lithium-ion secondary battery 1 may have a different structure.

As shown in FIG. 5, for example, a lithium-ion secondary battery 1 according to the second embodiment may include a lid plate 5 that is a stack of a flat metal plate 53 and a raised portion layer 54 having a smaller area than the metal plate 53. The stacked raised portion layer 54 with a thickness is the raised portion 52.

Similarly to the metal plate 51 in the lid plate 5 in the first embodiment, the metal plate 53 is sized to allow an outer edge 53a of the metal plate 53 to overlap and be weldable to the flange 34 on the battery can 3. The metal plate 53 that does not undergo shallow drawing may have a thickness different from the thickness of the metal plate 51 in the lid plate 5 in the first embodiment.

As described above, the stacked raised portion layer 54 having a smaller area than the metal plate 53 is the raised portion 52 of the lid plate 5. The raised portion 52 of the lid plate 5 in the second embodiment has a height (in other words, a height that is the same as or similar to the thickness of the raised portion layer 54) that is the same as the height of the raised portion 52 of the lid plate 5 in the first embodiment.

Similarly to the metal plate 51 in the lid plate 5 in the first embodiment, examples of the material for the flat metal plate 53 include iron, stainless steel, aluminum, and copper. Similarly to the metal plate 51 in the lid plate 5 in the first embodiment, the flat metal plate 53 may have a thickness of, for example, 0.1 to 1 mm.

When the thickness of the metal plate 51 or 53 is less than 0.1 mm, the lid plate 5 in the first and second embodiments does not function as the lid plate 5. When the thickness of the metal plate 51 or 53 is greater than 1 mm, the outer edge 51a or 53a may not be easily fixed to the battery can 3 by laser welding.

The material for the raised portion layer 54 may be the same material as the metal plate 53, but more specifically, may be an insulating material. For example, the raised portion layer 54 may be a film or a coating of a resin such as polyethylene, polypropylene, nylon, acrylonitrile butadiene styrene (ABS), polybutylene terephthalate (PBT), Bakelite, polyacetal, vinyl chloride, fluororesin, polyamideimide (PAI), polyetheretherketone (PEEK), polyetherimide (PEI), or polyimide (PI), a glass epoxy plate, or a ceramic plate.

The raised portion 52 that is the stacked raised portion layer 54 may have a height of, for example, 0.1 to 3 mm. When the height of the raised portion 52 is less than 0.1 mm, the lid plates 5 in adjacent lithium-ion secondary batteries 1 come in contact with each other in a battery pack 10 including the lithium-ion secondary batteries 1 arranged with the lid plates 5 facing each other. This structure cannot avoid stress concentration on the welding beads between the battery can 3 and the lid plate 5. When the height of the raised portion 52 exceeds 3 mm, side surfaces of the raised portion 52 interfere with a laser beam used for welding. (When tilted further for irradiation, the laser beam may exceed the range for processing with a galvanometer scanner, thus lowering the productivity.)

The raised portion layer 54 may be stacked on the metal plate 53 by, for example, bonding with double-sided tape or an adhesive (both not shown), coating, or transferring. When double-sided tape or an adhesive is used, the thickness of the double-sided tape or the adhesive is included in the height of the raised portion 52.

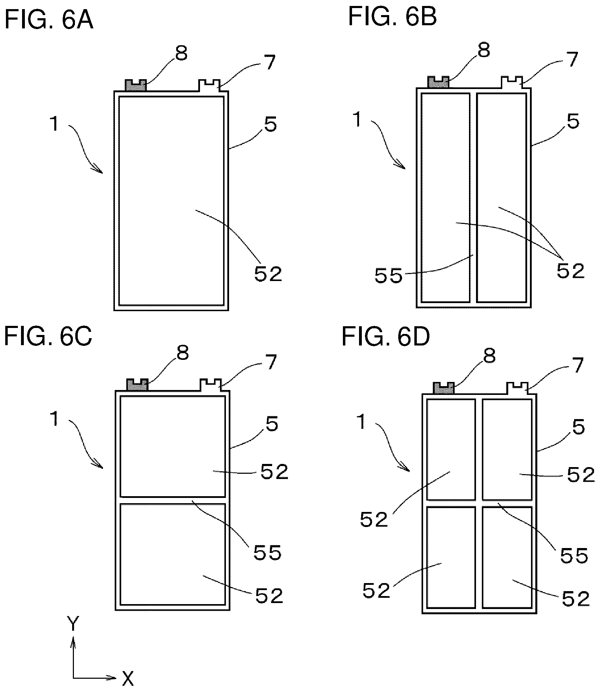

As shown in FIG. 6A, the raised portion 52 of the lid plate 5 in the present embodiment may be uniformly raised in an inner area of the outer edge 53a, but may have a different structure. For example, the flat raised portion 52 may be present divided into a plurality of areas in a plan view, and there is a clearance 55 between the raised portion layers 54 between the plurality of areas. For example, the divided areas may be arranged horizontally in the X-direction (refer to FIG. 6B), vertically in the Y-direction (refer to FIG. 6C), or vertically and horizontally in the X- and Y-directions (refer to FIG. 6D). In addition to the illustrated examples, a different number of divided areas may be arranged in a different direction as appropriate.

This structure allows the clearance 55 to be used as a cooling air channel for the battery pack 10.

The other components are the same as those in the first embodiment and will not be described.

Although the embodiments of the present invention have been described, the present invention is not limited to the embodiments, and may be changed in various manners without departing from the spirit and scope of the present invention. For example, the secondary battery 1 may include any number of components other than those described as examples herein.

### REFERENCE SIGNS LIST

- 1: secondary battery
- 2: electricity generator
- 21: cathode tab
- 22: anode tab
- 3: battery can
- 31: bottom
- 32: side wall
- 33: opening
- 34: flange
- 35: slot
- 5: lid plate
- 51, 53: metal plate
- 51a, 53a: outer edge
- 52: raised portion
- 54: raised portion layer
- 55: clearance
- 6: positive terminal
- 7: negative terminal
- 8: safety valve
- 10: battery pack
- 11: busbar
- 12: band
- 13: end plate
- 14: battery pack terminal

## Claims

1. A secondary battery, comprising:
an electricity generator being flat and including a stack of plurality of cathodes, anodes, and separators insulating the cathodes and the anodes;
a battery can comprising a metal, being quadrangular and shallow-drawn, including a flange on a periphery of an opening of the battery can and accommodating the electricity generator placed laterally;
a nonaqueous electrolyte filling the battery can accommodating the electricity generator;
a lid plate comprising a metal, including an outer edge welded to the flange on the battery can, covering the battery can and including a raised portion being flat and extending outward beyond the outer edge in an inner area of the outer edge;
one external terminal arranged on one of side walls of the battery can and being electrically connected to one of the cathodes or the anodes in the electricity generator; and
the other external terminal arranged on one side of the lid plate on the same side as the side wall on which the one external terminal is arranged and in a position that is line symmetric to the one external terminal in a plan view, and being electrically connected to the other of the cathodes or the anodes in the electricity generator.

2. The secondary battery according to claim 1, wherein
the raised portion of the lid plate has a height of 0.1 to 3 mm.

3. The secondary battery according to claim 1 or claim 2, wherein
the lid plate is a shallow-drawn metal plate, and the lid plate includes a shallow-drawn portion being the raised portion extending outward.

4. The secondary battery according to claim 1 or claim 2, wherein
the lid plate is a stack of a flat metal plate and a raised portion layer having a smaller area than the flat metal plate, and the raised portion is composed of thickness of the stacked raised portion layers.

5. The secondary battery according to claim 4, wherein
the raised portion being flat is present divided into a plurality of areas in a plan view, and there is a clearance between the plurality of areas of the raised portion.

6. A battery pack, comprising:
a plurality of the secondary batteries according to claim 1 arranged with the pair of positive external terminals and the negative external terminals on the upper side, with the front and back of the main surface being alternately switched in a direction perpendicular to the main surfaces having the largest area;
furthermore, the adjacent secondary batteries being connected in series with a busbar; and
a restraining member applying a restraining load in the arrangement direction of the secondary batteries.
